(19) Europäisches Patentamt
European Patent Office
Office européen des brevets

(11) **EP 4 557 551 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
*H02J 1/10* (2006.01)    *H02J 1/14* (2006.01)

(21) Application number: 23838586.8

(22) Date of filing: **05.06.2023**

(86) International application number:
**PCT/CN2023/098385**

(87) International publication number:
**WO 2024/012092 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 CN 202210835027**

(71) Applicant: **Wanbang Digital Energy Co., Ltd.**
**Changzhou, Jiangsu 213100 (CN)**

(72) Inventors:
• **ZHU, Xuancai**
**Changzhou, Jiangsu 213100 (CN)**

• **CHEN, Shen**
**Changzhou, Jiangsu 213100 (CN)**
• **GUO, Shuaipo**
**Changzhou, Jiangsu 213100 (CN)**
• **CHENG, Hao**
**Changzhou, Jiangsu 213100 (CN)**
• **WANG, Jisong**
**Changzhou, Jiangsu 213100 (CN)**

(74) Representative: **Kurig, Thomas**
**Becker Kurig & Partner**
**Patentanwälte mbB**
**Bavariastraße 7**
**80336 München (DE)**

(54) **DROOP CONTROL METHOD AND APPARATUS FOR ENERGY STORAGE SYSTEM IN DIRECT CURRENT MICROGRID**

(57)    The present invention provides a droop control method and apparatus for an energy storage system in a direct current microgrid. The method comprises the following steps: obtaining an initial droop curve; determining boundary conditions of droop control parameters in the droop curve; establishing an objective function by using the highest full charge-discharge cycle efficiency of an energy storage system as an objective; establishing a droop curve optimization model according to the objective function and the boundary conditions; solving the droop curve optimization model to obtain optimal solutions of the droop control parameters so as to update the initial droop curve; and controlling the energy storage system according to the updated droop curve. The present invention can improve the power conversion efficiency of the energy storage system and improve the economy and service life of the energy storage system or even the whole direct current microgrid.

FIG. 2

S1 — Obtain an initial droop curve

S2 — Determine boundary conditions of droop control parameters in the droop curve

S3 — Establish an objective function by using the highest full charge-discharge cycle efficiency of an energy storage system as an objective

S4 — Establish a droop curve optimization model according to the objective function and the boundary conditions

S5 — Solve the droop curve optimization model to obtain optimal solutions of the droop control parameters so as to update the initial droop curve

S6 — Control the energy storage system according to the updated droop curve

EP 4 557 551 A1

**Description**

**BACKGROUND**

Technical Field

The present invention relates to the field of direct current microgrid control technology, and in particular to a droop control method for an energy storage system in a direct current microgrid and a droop control apparatus for an energy storage system in a direct current microgrid.

Description of Related Art

In a direct current microgrid, the energy storage inverter generally uses droop control to regulate the battery power. To be specific, the energy management system (EMS) in the energy storage inverter generates a given value of the battery port voltage based on the expected battery power in combination with the droop curve and controls the energy storage inverter to control the port voltage to the given value. The bidirectional DC/DC converter then samples the current port voltage and regulates the battery power based on the same droop control curve. With this design, the port voltage control and battery power control performed by the inverter are decoupled, so that rapid regulation of battery power is achieved.

Although rapid regulation of battery power is achieved in the above mentioned droop control, the droop curve used is often only a feasible curve and cannot maximize the efficiency of the system.

**SUMMARY**

In order to solve the above technical problems, the present invention provides a droop control method and apparatus for an energy storage system in a direct current microgrid capable of improving power conversion efficiency of the energy storage system and improving economy and service life of the energy storage system or even the whole direct current microgrid.

The technical solutions adopted by the present invention are provided as follows.

A droop control method for an energy storage system in a direct current microgrid includes the following steps: An initial droop curve is obtained. Boundary conditions of droop control parameters in the droop curve are determined. An objective function is established by using highest full charge-discharge cycle efficiency of the energy storage system as an objective. A droop curve optimization model is established according to the objective function and the boundary conditions. The droop curve optimization model is solved to obtain optimal solutions of the droop control parameters so as to update the initial droop curve. The energy storage system is controlled according to the updated droop curve.

The droop control parameters in the droop curve include a discharge start voltage, a charge start voltage, a discharge droop coefficient, and charge droop coefficient.

The charge start voltage is not lower than the discharge start voltage.

The objective function is:

$$\max \eta_{cycle}=\eta_{charge}*\eta_{discharge}$$

$$\eta_{charge}=f((V_2+\frac{P_{ac\_max}}{K_2}),P_{ac\_max})$$

$$\eta_{discharge}=f((V_1-\frac{P_{ac\_max}}{K_1}),P_{ac\_max}),$$

where $\eta_{cycle}$ is the cycle efficiency of the energy storage system after full charge-discharge, $\eta_{charge}$ is efficiency of the energy storage system at full power charging, $\eta_{discharge}$ is efficiency of the energy storage system at full power discharging, $V_1$, $V_2$, $K_1$ and $K_2$ respectively are the discharge start voltage, the charge start voltage, the discharge droop coefficient and the charge droop coefficient, $P_{ac\_max}$ is maximum power of an alternating current side of an energy storage inverter in the direct current microgrid, and f() represents a functional relationship between efficiency and an independent variable.

The droop curve optimization model is solved by a complex method.

A droop control apparatus for an energy storage system in a direct current microgrid includes an acquisition module configured to obtain an initial droop curve, a determination module configured to determine boundary conditions of droop control parameters in the droop curve, a first establishment module configured to establish an objective function by using highest full charge-discharge cycle efficiency of the energy storage system as an objective, a second establishment module configured to establish a droop curve optimization model according to the objective function and the boundary conditions, an update module configured to solve the droop curve optimization model to obtain optimal solutions of the droop control parameters so as to update the initial droop curve, and a control module configured to control the energy storage system according to the updated droop curve.

The droop control parameters in the droop curve include a discharge start voltage, a charge start voltage, a discharge droop coefficient, and charge droop coefficient.

The charge start voltage is not lower than the discharge start voltage.

The objective function is:

$$\max \eta_{cycle} = \eta_{charge} * \eta_{discharge}$$

$$\eta_{charge} = f((V_2 + \frac{P_{ac\_max}}{K_2}), P_{ac\_max})$$

$$\eta_{discharge} = f((V_1 - \frac{P_{ac\_max}}{K_1}), P_{ac\_max}),$$

where $\eta_{cycle}$ is the cycle efficiency of the energy storage system after full charge-discharge, $\eta_{charge}$ is efficiency of the energy storage system at full power charging, $\eta_{discharge}$ is efficiency of the energy storage system at full power discharging, $V_1, V_2, K_1$ and $K_2$ respectively are the discharge start voltage, the charge start voltage, the discharge droop coefficient, and the charge droop coefficient, $P_{ac\_max}$ is maximum power of an alternating current side of an energy storage inverter in the direct current microgrid, and f() represents a functional relationship between efficiency and an independent variable.

The update module solves the droop curve optimization model by a complex method.

Beneficial effects provided by the present invention include the following.

The objective function is established by using the highest full charge-discharge cycle efficiency of the energy storage system as the objective in the present invention, and the optimal droop control parameters are solved according to the objective function to obtain the optimal droop curve. In this way, the power conversion efficiency of the energy storage system is improved, and the economy and service life of the energy storage system or even the whole direct current microgrid is improved.

## BRIEF DESCRIPTION OF THE DRAWINGS

FIG. 1 is a schematic view of a structure of a direct current microgrid according to an embodiment of the present invention.

FIG. 2 is a flow chart of a droop control method for an energy storage system in a direct current microgrid according to an embodiment of the present invention.

FIG. 3 is a schematic graph of a droop curve according to an embodiment of the present invention.

FIG. 4 is a schematic graph of update of the droop curve according to an embodiment of the present invention.

FIG. 5 is a schematic block diagram of a droop control apparatus for an energy storage system in a direct current microgrid according to an embodiment of the present invention.

## DESCRIPTION OF THE EMBODIMENTS

Description will now be made in detail to clearly and completely present preferred embodiments of the present invention, examples of which are illustrated in the accompanying drawings. Nevertheless, the disclosed embodiments are merely part of the embodiments of the present invention, not all the embodiments. Based on the embodiments of the present invention, all other embodiments obtained by a person having ordinary skill in the art without making any inventive effort fall within the scope that the present invention seeks to protect.

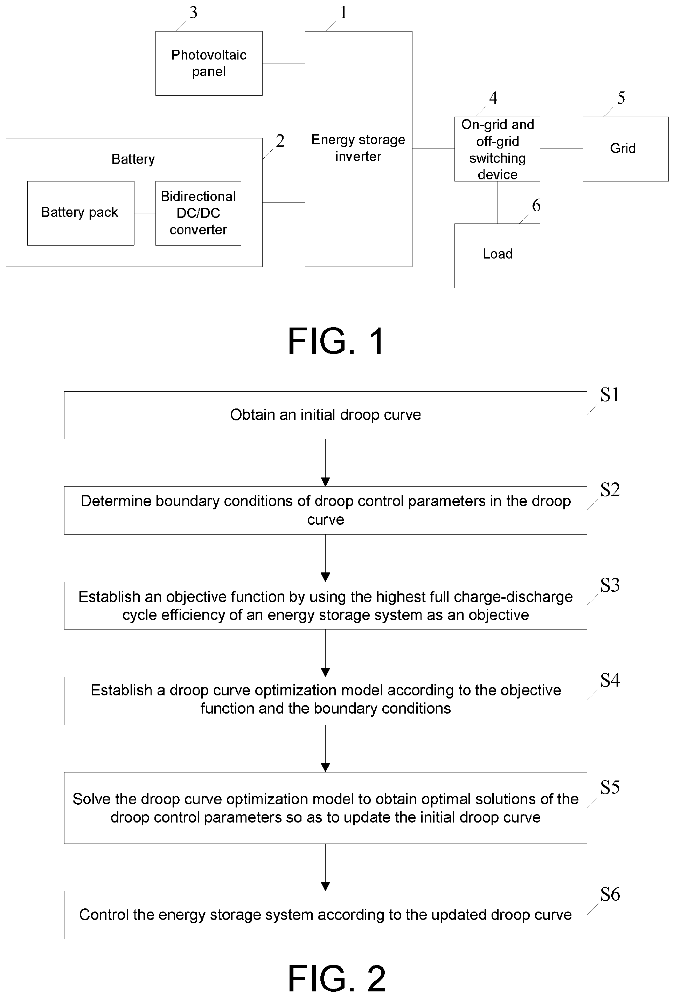

As shown in FIG. 1, in an embodiment of the present invention in the embodiments of the present invention, a direct current microgrid includes an energy storage inverter 1, a battery 2, and a photovoltaic panel 3, and the battery 2 and the energy storage inverter 1 constitute an energy storage system. The battery 2 and the photovoltaic panel 3 are connected to a direct current side of the energy storage inverter 1, and an alternating current side of the energy storage inverter 1 is connected to a grid 5 and a load 6 through an on-grid and off-grid switching device 4. The battery 2 includes a battery pack and a bidirectional DC/DC converter, and through the control of an EMS, an inverter controller and other control components in the energy storage inverter 1, the battery can both store energy and supply power to the grid and the load.

As shown in FIG. 2, a droop control method for an energy storage system in a direct current microgrid according to an embodiment of the present invention includes the following steps.

In S1, an initial droop curve is obtained.

The droop curve in the embodiments of the present invention is a power-voltage curve, that is, a curve representing a relationship between battery input power and a battery input port voltage. Herein, the battery input port voltage is the voltage of the battery's own port collected from inside the battery.

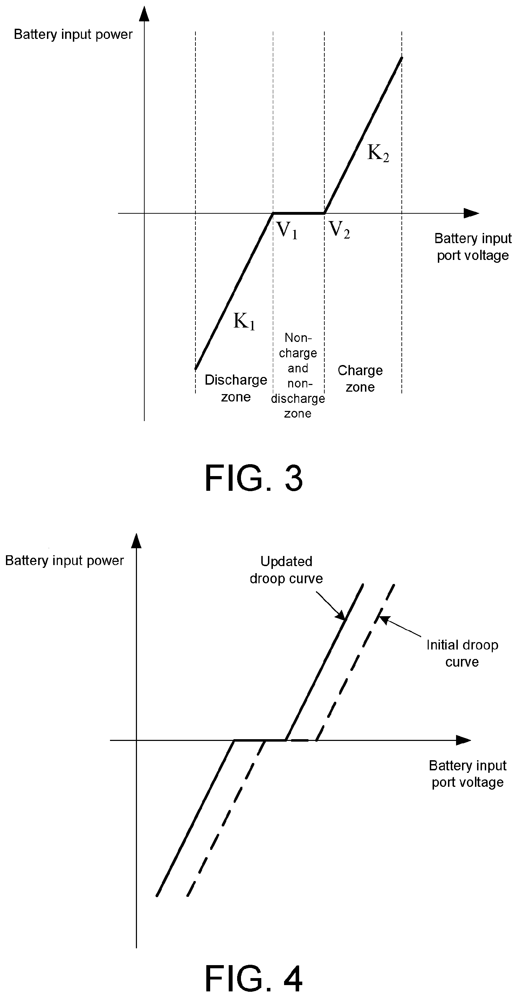

In an embodiment of the present invention, droop control parameters in the droop curve include a discharge start voltage $V_1$, a charge start voltage $V_2$, a discharge droop coefficient $K_1$ and charge droop coefficient $K_2$. Herein, the discharge start voltage $V_1$ and the charge start voltage $V_2$ may be the same or different. In a preferred embodiment of the present invention, as shown in FIG. 3, the charge start voltage $V_2$ may be greater than the discharge start voltage $V_1$, that is, the droop curve in a preferred embodiment of the present invention may include a charge zone, a non-charge and non-discharge zone, and a discharge zone. In the discharge zone, the battery input power is lower than or equal to 0, the battery input port voltage is lower than or equal to the discharge start voltage $V_1$, and the droop coefficient is $K_1$. In the non-charge and non-discharge zone, the battery input power is equal to 0, the battery input port voltage is between the discharge start voltage $V_1$ and the charge start voltage $V_2$, and the droop coefficient may be regarded as 0. In the charge zone, the battery input power is greater than or equal to 0, the battery input port voltage is greater than or equal to the charge start voltage $V_2$, and the droop coefficient is $K_2$. By adding a non-charge and non-discharge zone, frequent switching between charge and discharge states may be effectively avoided when the battery is close to a rated charge and discharge state switching voltage value.

In an embodiment of the present invention, the initial droop curve may be a pre-designed and stored one, or it may be the droop curve used when performing droop control in a previous control cycle. This initial droop curve can only ensure that the energy storage system works normally, but cannot ensure that cycle efficiency of the energy storage system reaches the optimum.

In S2, boundary conditions of the droop control parameters in the droop curve are determined.

The boundary conditions of the droop control parameters in the droop curve are the boundaries of values of the droop control parameters. In an embodiment of the present invention, the discharge start voltage $V_1$ and the charge start voltage $V_2$ have the same value boundaries, minimum values are both a bus voltage allowable minimum value $V_{bus\_min}$, and maximum values are both a bus voltage allowable maximum value $V_{bus\_max}$.

In an embodiment of the present invention, the bus voltage allowable minimum value is:

$$V_{bus\_min} = \sqrt{2}V_n + V_{margin},$$

where $V_n$ is a rated voltage of the alternating current side of the energy storage inverter, and $V_{margin}$ is a preset voltage margin, which may be 30V, for example.

The bus voltage allowable maximum value is:

$$V_{bus\_max} = k*V_{transistor} - V_{overshoot\_max},$$

where $V_{transistor}$ is a device withstand voltage, k is a safety coefficient, k is lower than 1 to ensure device safety, for example, it can be 0.8, and $V_{overshoot\_max}$ is a maximum overshoot voltage.

The discharge droop coefficient $K_1$ and the charge droop coefficient $K_2$ have the same value boundaries, and maximum and minimum values may be comprehensively selected based on accuracy of the battery input port voltage acquisition and maximum battery input power.

In S3, an objective function is established by using highest full charge-discharge cycle efficiency of the energy storage system as an objective.

The charge and discharge efficiency of the energy storage system depends on a bus voltage and power of the alternating current side of the energy storage inverter, that is, independent variables of an efficiency curve of the energy storage system are the bus voltage and the alternating current side power of the energy storage inverter. The specific relationship is as follows:

$$\eta = f(V_{bus}, P_{ac}),$$

where $\eta$ is working efficiency of the energy storage system, $V_{bus}$ is the bus voltage, $P_{ac}$ is the alternating current side power of the energy storage inverter, and f() represents a functional relationship between efficiency and independent variables.

In an embodiment of the present invention, the functional relationship between the working efficiency $\eta$ of the energy storage system and the bus voltage $V_{bus}$ and the alternating current side power $P_{ac}$ of the energy storage inverter is as follows:

$$\eta = f(V_{bus}, P_{ac}) = (k*V_{bus} + \omega)(a*P_{ac}^2 + b*P_{ac} + c),$$

where k is a coefficient of the bus voltage $V_{bus}$, $\omega$ is a constant term, a and b are coefficients of the alternating current side power $P_{ac}$ of the energy storage inverter, c is a constant term, and k, $\omega$, a, b, and c may be obtained by fitting.

The efficiency of full power charging of the energy storage system then is:

$$\eta_{charge} = f((V_2 + \frac{P_{ac\_max}}{K_2}), P_{ac\_max}).$$

The efficiency of full power discharging of the energy storage system is:

$$\eta_{discharge} = f((V_1 - \frac{P_{ac\_max}}{K_1}), P_{ac\_max}).$$

The cycle efficiency of the energy storage system after full charge-discharge is:

$$\eta_{cycle} = \eta_{charge} * \eta_{discharge},$$

where $\eta_{cycle}$ is the cycle efficiency of the energy storage system after full charge-discharge, $\eta_{charge}$ is the efficiency of the energy storage system at full power charging, $\eta_{discharge}$ is the efficiency of the energy storage system at full power discharging, and $P_{ac\_max}$ is maximum power of the alternating current side of the energy storage inverter in the direct current microgrid.

The objective function established in the embodiments of the present invention is:

$$\max \eta_{cycle} = \eta_{charge} * \eta_{discharge}.$$

In S4, a droop curve optimization model is established according to the objective function and the boundary conditions.

In S5, the droop curve optimization model is solved to obtain optimal solutions of the droop control parameters so as to update the initial droop curve.

In an embodiment of the present invention, a global optimization search algorithm, such as a complex method, may be used to solve the droop curve optimization model, and the optimal solutions of the discharge start voltage $V_1$, the charge start voltage $V_2$, the discharge droop coefficient $K_1$, and the charge droop coefficient $K_2$ may be obtained, so the droop curve is updated with the optimal droop control parameters.

In S6, the energy storage system is controlled according to the updated droop curve.

In the droop control method for the energy storage system in the direct current microgrid provided by the embodiments of the present invention, the optimal droop curve may be calculated according to the efficiency curve, and the energy storage system may be controlled by the optimal droop curve.

In a specific embodiment of the present invention, the initial droop curve is shown as the dotted line in FIG. 4, the discharge start voltage $V_1$ is 400V, the charge start voltage $V_2$ is 410V, and the discharge droop coefficient $K_1$ and the charge droop coefficient $K_2$ are both 250W/V. After the droop curve is updated using the method of the embodiments of the present invention, the updated droop curve is shown as the solid line in FIG. 4. Assuming that only the discharge start voltage $V_1$ and the charge start voltage $V_2$ are reduced by 5V after the update, and the discharge droop coefficient $K_1$ and the charge droop coefficient $K_2$ remain unchanged, then the efficiency comparison of the energy storage system under the control of the initial droop curve and the updated droop curve is shown in Table 1.

Table 1

| | Initial droop curve | Updated droop curve |
|---|---|---|
| Droop curve | charge zone: >410V, droop coefficient 250W/V; non-charge and non-discharge zone: 400-410V; discharge zone: <400V, droop coefficient 250W/V; | charge zone: >405V, droop coefficient 250W/V; non-charge and non-discharge zone: 395-405V; discharge zone: <395V, droop coefficient 250W/V; |
| Full power discharge efficiency | 95% | 95.5% |
| Full power charge efficiency | 94% | 94.5% |
| Cycle efficiency (full power discharge efficiency * full power charge efficiency) | 89.3% | 90.25% |
| Improved efficiency | 0.95% | |

It can be seen from Table 1 that the efficiency of the energy storage system under the updated droop curve control is significantly improved.

According to the droop control method for the energy storage system in the direct current microgrid provided by the embodiments of the present invention, the objective function is established by using the highest full charge-discharge cycle efficiency of the energy storage system as the objective, and the optimal droop control parameters are solved according to the objective function to obtain the optimal droop curve. In this way, the power conversion efficiency of the energy storage system is improved, and the economy and service life of the energy storage system or even the whole direct current microgrid is improved.

Corresponding to the droop control method for the energy storage system in the direct current microgrid of the abovementioned embodiments, the present invention further provides a droop control apparatus for an energy storage system in a direct current microgrid.

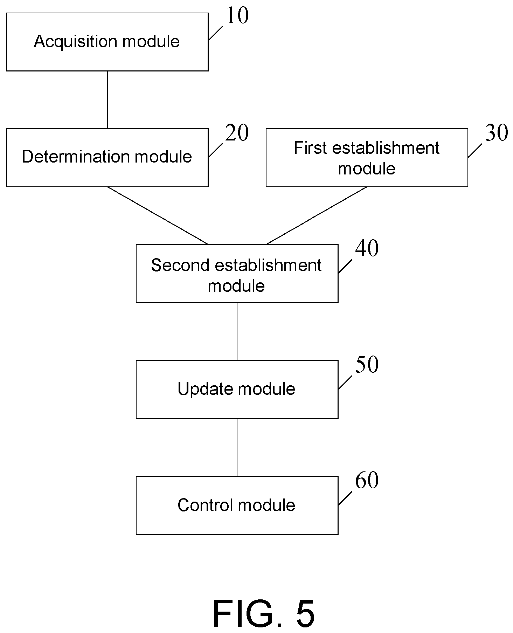

As shown in FIG. 5, a droop control apparatus for an energy storage system in a direct current microgrid of the embodiments of the present invention includes an acquisition module 10, a determination module 20, a first establishment module 30, a second establishment module 40, an update module 50, and a control module 60. Herein, the acquisition module 10 is configured to obtain an initial droop curve. The determination module 20 is configured to determine boundary conditions of droop control parameters in the droop curve. The first establishment module 30 is configured to establish an objective function by using highest full charge-discharge cycle efficiency of the energy storage system as an objective. The second establishment module 40 is configured to establish a droop curve optimization model according to the objective function and the boundary conditions. The update module 50 is configured to solve the droop curve optimization model to obtain optimal solutions of the droop control parameters so as to update the initial droop curve. The control module 60 is configured to control the energy storage system according to the updated droop curve.

The droop curve in the embodiments of the present invention is a power-voltage curve, that is, a curve representing a relationship between battery input power and a battery input port voltage. Herein, the battery input port voltage is the voltage of the battery's own port collected from inside the battery.

In an embodiment of the present invention, droop control parameters in the droop curve include a discharge start voltage $V_1$, a charge start voltage $V_2$, a discharge droop coefficient $K_1$, and charge droop coefficient $K_2$. Herein, the discharge start voltage $V_1$ and the charge start voltage $V_2$ may be the same or different. In a preferred embodiment of the present invention, as shown in FIG. 3, the charge start voltage $V_2$ may be greater than the discharge start voltage $V_1$, that is, the droop curve in a preferred embodiment of the present invention may include a charge zone, a non-charge and non-discharge zone, and a discharge zone. In the discharge zone, the battery input power is lower than or equal to 0, the battery input port voltage is lower than or equal to the discharge start voltage $V_1$, and the droop coefficient is $K_1$. In the non-charge and non-discharge zone, the battery input power is equal to 0, the battery input port voltage is between the discharge start voltage $V_1$ and the charge start voltage $V_2$, and the droop coefficient may be regarded as 0. In the charge zone, the battery input power is greater than or equal to 0, the battery input port voltage is greater than or equal to the charge start voltage $V_2$, and the droop coefficient is $K_2$. By adding a non-charge and non-discharge zone, frequent switching between charge and discharge states may be effectively avoided when the battery is close to a rated charge and discharge state switching voltage value.

In an embodiment of the present invention, the initial droop curve may be a pre-designed and stored one, or it may be the droop curve used when performing droop control in a previous control cycle. This initial droop curve can only ensure that the energy storage system works normally, but cannot ensure that cycle efficiency of the energy storage system reaches the optimum.

The boundary conditions of the droop control parameters in the droop curve are the boundaries of values of the droop control parameters. In an embodiment of the present invention, the discharge start voltage $V_1$ and the charge start voltage $V_2$ have the same value boundaries, minimum values are both a bus voltage allowable minimum value $V_{bus\_min}$, and maximum values are both a bus voltage allowable maximum value $V_{bus\_max}$.

In an embodiment of the present invention, the bus voltage allowable minimum value is:

$$V_{bus\_min} = \sqrt{2}V_n + V_{margin},$$

where $V_n$ is a rated voltage of the alternating current side of the energy storage inverter, and $V_{margin}$ is a preset voltage margin, which may be 30V, for example.

The bus voltage allowable maximum value is:

$$V_{bus\_max} = k*V_{transistor} - V_{overshoot\_max},$$

where $V_{transistor}$ is a device withstand voltage, k is a safety coefficient, k is lower than 1 to ensure device safety, for example, it can be 0.8, and $V_{overshoot\_max}$ is a maximum overshoot voltage.

The discharge droop coefficient $K_1$ and the charge droop coefficient $K_2$ have the same value boundaries, and maximum and minimum values may be comprehensively selected based on accuracy of the battery input port voltage acquisition and maximum battery input power.

The charge and discharge efficiency of the energy storage system depends on a bus voltage and power of the alternating current side of the energy storage inverter, that is, independent variables of an efficiency curve of the energy storage system are the bus voltage and the alternating current side power of the energy storage inverter. The specific relationship is as follows:

$$\eta = f(V_{bus}, P_{ac}),$$

where $\eta$ is working efficiency of the energy storage system, $V_{bus}$ is the bus voltage, $P_{ac}$ is the alternating current side power of the energy storage inverter, and f() represents a functional relationship between efficiency and independent variables.

In an embodiment of the present invention, the functional relationship between the working efficiency $\eta$ of the energy storage system and the bus voltage $V_{bus}$ and the alternating current side power $P_{ac}$ of the energy storage inverter is as follows:

$$\eta = f(V_{bus}, P_{ac}) = (k*V_{bus} + \omega)(a*P_{ac}^2 + b*P_{ac} + c),$$

where k is a coefficient of the bus voltage $V_{bus}$, $\omega$ is a constant term, a and b are coefficients of the alternating current side power $P_{ac}$ of the energy storage inverter, c is a constant term, and k, $\omega$, a, b, and c may be obtained by fitting.

The efficiency of full power charging of the energy storage system then is:

$$\eta_{charge} = f((V_2 + \frac{P_{ac\_max}}{K_2}), P_{ac\_max}).$$

The efficiency of full power discharging of the energy storage system is:

$$\eta_{discharge} = f((V_1 - \frac{P_{ac\_max}}{K_1}), P_{ac\_max}).$$

The cycle efficiency of the energy storage system after full charge-discharge is:

$$\eta_{cycle} = \eta_{charge} * \eta_{discharge},$$

where $\eta_{cycle}$ is the cycle efficiency of the energy storage system after full charge-discharge, $\eta_{charge}$ is the efficiency of the energy storage system at full power charging, $\eta_{discharge}$ is the efficiency of the energy storage system at full power discharging, and $P_{ac\_max}$ is maximum power of the alternating current side of the energy storage inverter in the direct current microgrid.

The objective function established by the first establishment module 30 is:

$$\max \eta_{cycle} = \eta_{charge} * \eta_{discharge}.$$

In an embodiment of the present invention, the update module 50 may use a global optimization search algorithm, such as a complex method, to solve the droop curve optimization model, and the optimal solutions of the discharge start voltage $V_1$, the charge start voltage $V_2$, the discharge droop coefficient $K_1$, and the charge droop coefficient $K_2$ may be obtained, so the droop curve is updated with the optimal droop control parameters.

In the droop control apparatus for the energy storage system in the direct current microgrid provided by the embodiments of the present invention, the optimal droop curve may be calculated according to the efficiency curve, and the energy storage system may be controlled by the optimal droop curve.

In a specific embodiment of the present invention, the initial droop curve is shown as the dotted line in FIG. 4, the discharge start voltage $V_1$ is 400V, the charge start voltage $V_2$ is 410V, and the discharge droop coefficient $K_1$ and the charge droop coefficient $K_2$ are both 250W/V. After the droop curve is updated using the apparatus of the embodiments of the present invention, the updated droop curve is shown as the solid line in FIG. 4. Assuming that only the discharge start voltage $V_1$ and the charge start voltage $V_2$ are reduced by 5V after the update, and the discharge droop coefficient $K_1$ and the charge droop coefficient $K_2$ remain unchanged, then the efficiency comparison of the energy storage system under the control of the initial droop curve and the updated droop curve is shown in Table 1.

It can be seen from Table 1 that the efficiency of the energy storage system under the updated droop curve control is significantly improved.

According to the droop control apparatus for the energy storage system in the direct current microgrid provided by the embodiments of the present invention, the objective function is established by using the highest full charge-discharge cycle efficiency of the energy storage system as the objective, and the optimal droop control parameters are solved according to the objective function to obtain the optimal droop curve. In this way, the power conversion efficiency of the energy storage system is improved, and the economy and service life of the energy storage system or even the whole direct current microgrid is improved.

In the description of the present invention, the terms "first" and "second" are only used for descriptive purposes and cannot be understood as indicating or implying relative importance or implicitly indicating the number of indicated technical features. Thus, the features defined with "first" and "second" may explicitly or implicitly include one or more of these features. The term "plurality" means one or more than one unless specifically defined otherwise.

In the present invention, unless clearly specified and defined otherwise, the terms "installed", "connected", "connecting", "fixed" and other terms should be understood in a broad sense, for instance, it can be a fixed connection, a detachable connection, or an integral connection, it can be a mechanical connection or an electrical connection, it can be a direct connection or an indirect connection through an intermediate medium, and it can be an internal communication between two components or an interaction relationship between two components. For a person having ordinary skill in the art, the specific meaning of the above-mentioned terms in the present invention can be understood according to specific circumstances.

In the present invention, unless otherwise clearly specified and defined, a first feature being "on" or "under" a second feature may mean that the first and second features are in direct contact, or the first and second features are in indirect contact through an intermediate medium. Further, the first feature being "on", "above", and "upon" the second feature may mean that the first feature is directly above or obliquely above the second feature, or simply means that the level of the first feature is higher than that of the second feature. The first feature being "under", "below", and "beneath" the second feature may mean that the first feature is directly under or obliquely under the second feature, or simply means that the level of the first feature is lower than that of the second feature.

In the description of the specification, descriptions with reference to the terms such as "one embodiment", "some embodiments", "examples", "specific examples", or "some examples" etc. means that the specific features, structures, materials, or characteristics described in combination with the embodiment(s) or example(s) are included in at least one embodiment or example of the present invention. In the specification, the schematic representation of the above-mentioned terms does not necessarily refer to the same embodiment or example. Further, the described specific features, structures, materials, or characteristics may be combined in any one or more embodiments or examples in a suitable manner. Besides, a person having ordinary skill in the art may reincorporate and combine different embodiments or examples and features of different embodiments or examples described in the specification without conflicting with each other.

Any process or method descriptions in the flow chart or otherwise described herein may be understood to represent modules, segments, or portions of code including one or more executable instructions for implementing specific logical functions or steps of the process. Further, the scope of the preferred embodiments of the present invention includes alternative implementations in which functions may be performed out of the order shown or discussed, including substantially concurrent or in reverse order, depending upon the functions involved, which should be recognized by a person having ordinary skill in the art.

The logic and/or steps represented in the flow chart or otherwise described herein, such as a sequenced list of executable instructions, which are considered to be used to implement logical functions, may be embodied in any computer readable medium for use by or in together with, an instruction execution system, apparatus, or device (e.g., a computer-based system, a system including a processor, or other systems that can fetch and execute instructions from an instruction execution system, device, or apparatus). In the specification, the "computer-readable medium" may be any means that can contain, store, communicate, propagate, or transport the program for use by or together with an instruction execution system, device, or apparatus. More specific examples (non-exhaustive list) of the computer-readable medium include the following: an electrical connection portion (electronic device) with one or more wires, a portable computer disk case (magnetic device), a random access memory (RAM), a read-only memory (ROM), an erasable programmable read-only memory (EPROM or flash memory), a fiber optic device, and a portable optical disk ROM (CD-ROM). Besides, the computer-readable medium may even be paper or other suitable medium on which the program may be printed, as the paper or other medium may be scanned, for example, optically. The program is then obtained electronically by editing, interpreting or, if necessary, processing in another suitable manner, and the program is then stored in a computer memory.

It should be understood that various parts of the present invention may be implemented by hardware, software, firmware, or a combination thereof. In the embodiments described above, various steps or methods may be implemented by software or firmware stored in memory and executed by a suitable instruction execution system. For instance, if implemented in hardware, as in another embodiment, it can be implemented by any one or a combination of the following techniques known in the art: a discrete logic circuit with logic gates for implementing logic functions on data signals, an application specific integrated circuit with appropriate combinational logic gates, a programmable gate array (PGA), a field programmable gate array (FPGA), etc.

A person having ordinary skill in the art can understand that all or part of the steps carried out in the method of the above embodiments can be implemented by instructing related hardware through a program. The program can be stored in a computer-readable storage medium, and when the program is executed, it includes one of the steps of the method embodiments or a combination thereof.

In addition, in the embodiments of the present invention, each functional unit may be integrated into one processing module, or each unit may exist alone physically, or two or more units may be integrated into one module. The integrated module may be implemented in the form of hardware or in the form of a software functional module. If the integrated module is implemented in the form of a software functional module and sold or used as an independent product, it may also be stored in a computer-readable storage medium.

Although the embodiments of the present invention have been shown and described above, it can be understood that the above-mentioned embodiments are exemplary and should not be construed as limiting the present invention. A person having ordinary skill in the art may make changes, corrections, substitutions, and modifications to the above-mentioned embodiments within the scope of the present invention.

**Claims**

1. A droop control method for an energy storage system in a direct current microgrid, **characterized in** comprising the following steps:

   obtaining an initial droop curve;
   determining boundary conditions of droop control parameters in the droop curve;
   establishing an objective function by using highest full charge-discharge cycle efficiency of the energy storage system as an objective;
   establishing a droop curve optimization model according to the objective function and the boundary conditions;
   solving the droop curve optimization model to obtain optimal solutions of the droop control parameters so as to update the initial droop curve; and
   controlling the energy storage system according to an updated droop curve.

2. The droop control method for the energy storage system in the direct current microgrid according to claim 1, **characterized in that** the droop control parameters in the droop curve comprise a discharge start voltage, a charge start voltage, a discharge droop coefficient, and a charge droop coefficient.

3. The droop control method for the energy storage system in the direct current microgrid according to claim 2, **characterized in that** the charge start voltage is not lower than the discharge start voltage.

4. The droop control method for the energy storage system in the direct current microgrid according to claim 3, **characterized in that** the objective function is:

$$\max \eta_{cycle} = \eta_{charge} * \eta_{discharge}$$

$$\eta_{charge} = f((V_2 + \frac{P_{ac\_max}}{K_2}), P_{ac\_max})$$

$$\eta_{discharge} = f((V_1 - \frac{P_{ac\_max}}{K_1}), P_{ac\_max})$$

where $n_{cycle}$ is a cycle efficiency of the energy storage system after full charge-discharge; $\eta_{charge}$ is efficiency of the energy storage system at full power charging; $\eta_{discharge}$ is efficiency of the energy storage system at full power discharging; $V_1$, $V_2$, $K_1$, and $K_2$ respectively are the discharge start voltage, the charge start voltage, the discharge droop coefficient, and the charge droop coefficient; $P_{ac\_max}$ is maximum power of an alternating current side of an energy storage inverter in the direct current microgrid; f() represents a functional relationship between an efficiency and an independent variable.

5. The droop control method for the energy storage system in the direct current microgrid according to claim 4, **characterized in that** the droop curve optimization model is solved by a complex method.

6. A droop control apparatus for an energy storage system in a direct current microgrid, **characterized in** comprising:

an acquisition module, configured to obtain an initial droop curve;
a determination module, configured to determine boundary conditions of droop control parameters in the droop curve;
a first establishment module, configured to establish an objective function by using highest full charge-discharge cycle efficiency of the energy storage system as an objective;
a second establishment module, configured to establish a droop curve optimization model according to the objective function and the boundary conditions;
an update module, configured to solve the droop curve optimization model to obtain optimal solutions of the droop control parameters so as to update the initial droop curve; and
a control module, configured to control the energy storage system according to the updated droop curve.

7. The droop control apparatus for the energy storage system in the direct current microgrid according to claim 6, **characterized in that** the droop control parameters in the droop curve comprise a discharge start voltage, a charge start voltage, a discharge droop coefficient, and a charge droop coefficient.

8. The droop control apparatus for the energy storage system in the direct current microgrid according to claim 7, **characterized in that** the charge start voltage is not lower than the discharge start voltage.

9. The droop control apparatus for the energy storage system in the direct current microgrid according to claim 8, **characterized in that** the objective function is:

$$\max \eta_{cycle} = \eta_{charge} * \eta_{discharge}$$

$$\eta_{charge} = f((V_2 + \frac{P_{ac\_max}}{K_2}), P_{ac\_max})$$

$$\eta_{discharge} = f((V_1 - \frac{P_{ac\_max}}{K_1}), P_{ac\_max})$$

where $n_{cycle}$ is a cycle efficiency of the energy storage system after full charge-discharge, $\eta_{charge}$ is efficiency of the energy storage system at full power charging, $\eta_{discharge}$ is efficiency of the energy storage system at full power discharging, $V_1$, $V_2$, $K_1$, and $K_2$ respectively are the discharge start voltage, the charge start voltage, the discharge droop coefficient, and the charge droop coefficient, $P_{ac\_max}$ is maximum power of an alternating current side of an energy storage inverter in the direct current microgrid, and f() represents a functional relationship between efficiency and an independent variable.

10. The droop control apparatus for the energy storage system in the direct current microgrid according to claim 9, **characterized in that** the update module solves the droop curve optimization model by a complex method.

# FIG. 1

| | |
|---|---|
| Obtain an initial droop curve | S1 |
| Determine boundary conditions of droop control parameters in the droop curve | S2 |
| Establish an objective function by using the highest full charge-discharge cycle efficiency of an energy storage system as an objective | S3 |
| Establish a droop curve optimization model according to the objective function and the boundary conditions | S4 |
| Solve the droop curve optimization model to obtain optimal solutions of the droop control parameters so as to update the initial droop curve | S5 |
| Control the energy storage system according to the updated droop curve | S6 |

# FIG. 2

Battery input power

$K_2$

$V_1$  $V_2$

Battery input
port voltage

$K_1$

Non-
charge
and
non-
discharge
zone

Discharge
zone

Charge
zone

## FIG. 3

Battery input power

Updated
droop curve

Initial droop
curve

Battery input
port voltage

## FIG. 4

FIG. 5

## INTERNATIONAL SEARCH REPORT

| International application No. |
| --- |
| **PCT/CN2023/098385** |

| A. | CLASSIFICATION OF SUBJECT MATTER |
| --- | --- |

H02J1/10(2006.01)i; H02J1/14(2006.01)i

According to International Patent Classification (IPC) or to both national classification and IPC

| B. | FIELDS SEARCHED |
| --- | --- |

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI: 下垂, 储能, 电池, 电容, 目标函数, 满功率, 满 3d 充, 满 3d 放, 效率, 充电功率, 放电功率, 充放电, 模型, droop, energy storage, battery, cell, capacitor, target function, efficiency, full charge, full discharge, power, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115313351 A (WANBANG DIGITAL ENERGY CO., LTD. et al.) 08 November 2022 (2022-11-08)<br>claims 1-10, description, paragraphs 32-100, and figures 1-5 | 1-10 |
| A | US 2016268818 A1 (LSIS CO., LTD.) 15 September 2016 (2016-09-15)<br>description, paragraphs 34-78, and figures 2-7 | 1-10 |
| A | CN 105790315 A (ANHUI POLYTECHNIC UNIVERSITY) 20 July 2016 (2016-07-20)<br>entire document | 1-10 |
| A | CN 108599194 A (SOUTHEAST UNIVERSITY) 28 September 2018 (2018-09-28)<br>entire document | 1-10 |
| A | CN 110365052 A (NORTHEASTERN UNIVERSITY) 22 October 2019 (2019-10-22)<br>entire document | 1-10 |
| A | CN 108565887 A (HUBEI UNIVERSITY OF TECHNOLOGY) 21 September 2018 (2018-09-21)<br>entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 September 2023** | **20 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/098385**

| Patent document cited in search report | | | Publication date (day/month/year) | Patent family member(s) | | | Publication date (day/month/year) |
|---|---|---|---|---|---|---|---|
| CN | 115313351 | A | 08 November 2022 | None | | | |
| US | 2016268818 | A1 | 15 September 2016 | US | 10090685 | B2 | 02 October 2018 |
| | | | | KR | 20160109273 | A | 21 September 2016 |
| | | | | KR | 101809787 | B1 | 15 December 2017 |
| | | | | JP | 2016167965 | A | 15 September 2016 |
| | | | | JP | 6615602 | B2 | 04 December 2019 |
| | | | | CN | 105978009 | A | 28 September 2016 |
| | | | | CN | 105978009 | B | 05 May 2020 |
| CN | 105790315 | A | 20 July 2016 | None | | | |
| CN | 108599194 | A | 28 September 2018 | None | | | |
| CN | 110365052 | A | 22 October 2019 | None | | | |
| CN | 108565887 | A | 21 September 2018 | None | | | |

Form PCT/ISA/210 (patent family annex) (July 2022)